# EUROPEAN PATENT APPLICATION

(11) **EP 4 717 932 A1**
(43) Date of publication of application: **01.04.2026**
(21) Application number: 24810516.5
(22) Date of filing: 21.05.2024
(51) Int. Cl.: F16B 13/06, E02D 5/80

(54) **METHOD AND DEVICE FOR ANCHORING AN ELEMENT TO THE GROUND**

(30) Priority: 23.05.2023 ES 202330406
(71) Applicant: Calabuig Vano, Vicente, 46880 Bocairent (Valencia) (ES)
(72) Inventor: Calabuig Vano, Vicente, 46880 Bocairent (Valencia) (ES)
(74) Representative: Soler Lerma, Santiago
(86) International application number: PCT/ES2024/070304
(87) International publication number: WO 2024/240979

(57) **Abstract**

The method comprises a first step of inserting the device into a cavity, a second step wherein a tractive device pulls on a rod and this, in its upward movement, actuates an actuator and causes the deformation of a deformable element that when deformed occupies the section of the cavity and is anchored to the ground, a third step wherein the stroke of the rod is braked by the action of a stop, a fourth step of tensioning the rod and downward pressure on the plate, a fifth step of breaking a bolt and lowering the plate which tightens against the ground and a sixth step wherein the rod is secured in position.

## Description

The invention, as its name indicates, relates to a method and device for anchoring an element to the ground, usually in soil.

The device comprises a plate with a hole that gives access to a main conduit, preferably tubular, through which a rod runs, which can be threaded, which protrudes from the main conduit at its ends, exiting above ground through the hole of the plate to be attached to a tensioning device.

At the lower end of the main conduit, and aligned with it, a secondary conduit attached to the main conduit is arranged by a bolt that will maintain the relative position between the two until the moment that bolt breaks. At the bottom of that secondary conduit a deformable element is arranged. The rod passes through both the main and secondary conduits and the deformable element.

The device further comprises a series of elements that constrain and limit the movement of the rod.

The method for anchoring an element to the ground comprises a step of introducing the device into a pre-existing suitable cavity in the ground and wherein the device preferably enters in an adjusted manner, a step wherein a traction device pulls the rod and this, in its upward movement and being attached to at least one actuator, causes the deformation of the deformable part that thus anchors the device to the ground, a braking step of the stroke of the rod and adjustment wherein, by braking the ascent of the rod, the tension applied on it causes the bolt to break and the descent of the plate and the main conduit, thus adjusting the plate to the ground, eliminating possible clearances with respect to the surface on which they rest.

The field of action of this invention is that of anchoring devices.

### BACKGROUND

Anchoring systems are known that comprise a deformable element that is introduced into a cavity in the ground and that by means of an actuator is deformed within that cavity in such a way that the pressure and friction generated by that deformed element causes the device to be anchored to the ground. The following documents retrieved from the patent literature are examples.

Document KR101017412 describes a ground anchoring device for securing the slope of a rocky surface, which has a deformable element actuated by an actuator that is attached at the end of tension cables that connect on the surface with a pressure piece on the ground. The device provides an anchorage to the ground in two steps facilitated by fastening bands that in the second step are cut by a cutting element facilitating their extension and that the friction against the cavity is maximum. It has a tension spring, which in the second step allows to increase the tightness of the pressure piece on the slope of the ground.

Document KR101497675B1 discloses an anchorage to the ground intended to reinforce a slope, which has an anchorage head formed by a deformable element that is located at the end of the anchorage bar and that is actuated by a threaded actuator at the end of the bar and by a stop piece that borders a tube inside which the bar can slide.

Document US5820321A discloses a device for anchoring an element to the ground comprising a plate with a through hole located on the surface of the ground, a rod that crosses the plate through the through hole and that in its lower part comprises an actuator, a deformable element which has an initial state suitable for being introduced into a hole in the ground and sliding inside it and an expanded state wherein the geometry adopted by the deformable element prevents it from sliding through the hole, and a series of elements arranged along the rod that constrain the upward or downward movement thereof.

Document DE3835296, which could be considered closer, refers to a device for anchoring an element to the ground comprising a piece (6) with a through hole located on the surface of the ground, a rod (4) that crosses the piece (6) through the hole and that in its lower part comprises an actuator (18), a deformable element (9) which, in an initial state is suitable to enter a hole in the ground and slide inside it, and in an expanded state adopts a geometry that prevents it from sliding through the hole, as well as a series of elements arranged along the rod that condition its upward or downward movement preventing its retraction.

None of the cited patents allow anchoring by first fixing a deformable element in a cavity and at a later time adjusting the outer part of the anchor to the ground surface.

### DESCRIPTION OF THE INVENTION

To overcome the aforementioned drawbacks, the present invention relates to a method for anchoring an element to ground and the device that allows this to be carried out.

The system comprises a rod associated with a traction element, such as an hydraulic jack. Due to the traction, the rod ascends and deforms a deformable element, anchoring the assembly to the ground wherein part of the device has been introduced. The stroke of the rod, after deforming the deformable element, is braked by a stop preventing it from continuing its ascent in such a way that when continuing to apply traction on the rod and it cannot continue ascending due to the action of the stop, this causes the bolt to break, giving way to the descent of an upper structure that comprises a plate and a main conduit, adjusting said plate against the ground causing the fixation to be reinforced.

To do this, the device comprises:
- A plate suitable for resting on the surface of the ground and comprising a through hole.
- A rod, preferably threaded, that crosses the plate through the hole and that in its lower part is attached to an actuator, such as an additional thread, a handle or any other element that allows action on a deformable element. This rod, during the anchoring operations, is associated with a traction element, such as an hydraulic jack, which pulls it upwards.
- A preferably tubular main conduit facing the bottom of the through hole of the plate. The rod passes through this conduit and comprises a support for a bolt element.
- A secondary conduit arranged in the lower part of the main conduit, aligned and preferably coaxial with it with at least one opening for housing a stop part and a support, such as a hole, for a bolt element.
- A deformable element preferably arranged at the lower end of the secondary conduit. This deformable element interacts with the rod and, in a preferred embodiment, is crossed by it. We understand deformable element to mean any element that, once installed, is capable of modifying its geometry and being anchored (by friction, insertion, pressure or any other means) to the ground. To achieve this, it presents two states, an initial state suitable for introducing it into a hole in the ground and an expanded state wherein the geometry adopted by the deformable element prevents it from sliding out through the hole. The passage from one state to another is produced by the action of the actuator attached to the rod when it moves upwards.
- A series of elements that constrain and limit the upward or downward movement of said rod within the main conduit. These elements are:
   ∘ a brake that fixes the rod when it is at its highest point, preventing its retraction and preventing the deformable part from returning to its initial state once expanded.
   ∘ a stop part
   ∘ an end-of-stroke piece that, when hitting the stop, stops the rod from rising and prevents the deformable element from continuing to expand once the desired state of expansion has been reached.

With the device at the beginning of its use, the support of the bolt element existing in the main conduit and the support of the bolt element existing in the secondary conduit interact, both supports comprising holes and the holes of both and the bolt housed therein being preferably aligned.

In a preferred embodiment the brake is arranged below the bolt element and the stop and the end-of-stroke part below the brake where the stop is arranged between the brake and the end-of-stroke part.

In one possible embodiment, the secondary conduit is an inner conduit, coaxial with the main one and which is inserted into it and the rod, together with its joined elements, runs inside both.

The action of a tractive element causes the rod to ascend from its initial position, moving the actuator and causing the expansion of the deformable element. Once the end-of-stroke element reaches the stop, the upward movement of the rod is braked, however, with the tractive element continuing to pull the rod, a downward vertical thrust force of the plate is generated which, at first, does not descend since the main conduit prevents it and this in turn is prevented by the bolt that acts as a barrier between the main conduit and the secondary conduit maintaining, until a certain moment, the relative position of one with respect to the other.

When that vertical downward force is sufficient to break the bolt, the plate and the main conduit are forced down by the tractive element and in this way the plate is adjusted against the surface on which it rests by pressing on it and being tightened to it.

In a possible embodiment, the device comprises a fixed actuator that also cooperates in the opening of the deformable element. Said fixed actuator is arranged above the deformable element in such a way that the deformable element, by pushing the actuator, advances against the fixed actuator, and when it meets the latter, the deformation of the upper part of the deformable element occurs. In this embodiment, both the actuator and the fixed actuator act against the deformable element, requiring less travel of the rod to achieve complete deformation of the deformable element.

The anchoring method that can be applied with the described device comprises the following steps:
- A first step of location wherein the main and secondary conduit assembly, with the deformable element and the rod with its associated elements are housed in a hole in the ground, usually pre-existing, of sufficient diameter for said pieces to slide through its interior. The rod runs through the main conduit, the secondary conduit and the deformable element. The plate is placed on the surface of the ground with its through hole facing the upper end of the main conduit and through that hole the rod protrudes upwards. The tractive element that is associated with the rod is arranged on the plate, through any suitable element such as a thread at a traction point. Preferably, a second thread is arranged, below the pulling point, which will fix the position of the rod, abutting the plate.
- A second expansion step of the deformable element wherein the traction element tightens the rod, moving it upwards causing, with its actuator, the deformable element to be anchored to the internal walls of the cavity. In one possible embodiment, this actuator comprises a widening of the rod, such as a thread, a ball or a conical part, among others, which, when penetrating the deformable element, expands it.
- A third step comprising the end of ascent of the rod wherein the upward movement is interrupted by the action of the stop arranged in the body of the rod.
- A fourth step of tensioning the rod and acting on the bolt whereby, once the upward movement has stopped, as the tractive element continues pulling on the rod and it cannot continue the ascent, it is tensioned and the traction force acts vertically downwards on the plate and the main conduit, however these do not descend by the action of the bolt. In this step, the brake geometry traps the rod, preventing its retraction and preventing the deformable element from returning to its initial state.
- A fifth step wherein the bolt breaks and lowers the plate wherein the bolt that attaches the main conduit with the secondary conduit and that acts as a latch maintaining the relative position between the two, is broken by the force that the main conduit exerts on that bolt in a vertical downward direction. Once the bolt has been broken, the main conduit can be lowered and with it the plate that, in this way, is tightened by pressing on the surface of the ground.
- A sixth securing step wherein the part of the rod that protrudes through the plate is fixed to prevent its retraction.

### DESCRIPTION OF THE FIGURES

For clarity, some figures are attached that reflect the sequence of the anchoring method and show the device.

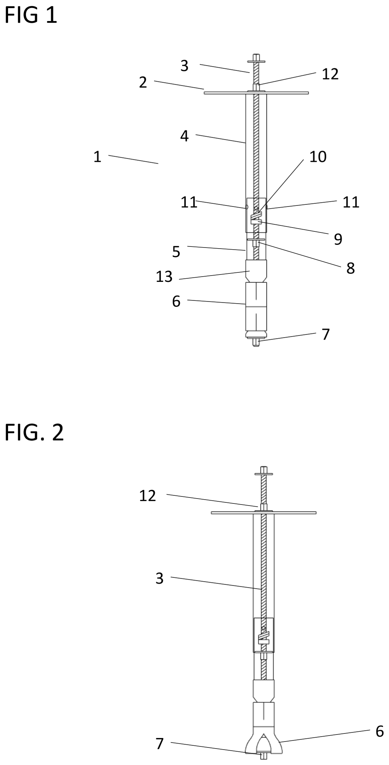

FIGURE 1 shows the device (1) wherein the plate (2) is seen with the rod (3) protruding from its upper part and passing through the main conduit (4) the secondary conduit (5) and the deformable element (6) represented here in its initial state. Along the rod are arranged, the actuator (7), the stroke end (8), and the brake (10), and arranged in the secondary conduit the stop (9) and the bolt (11) that maintains, until the moment it breaks, the relative position of the secondary conduit (5) and the main conduit (4). The fixed actuator (13) and the fixing screw (12) that will serve as a reinforcement to ensure the position of the rod avoiding its retraction can also be seen.
FIGURE 2 shows a moment wherein the rod (3) has started its ascent by dragging the actuator (7) that deforms the deformable element (6). A fixing screw (12) is also shown.

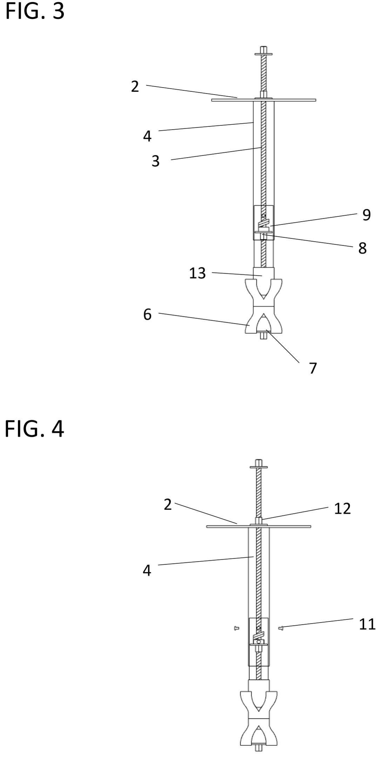

FIGURE 3 shows a moment when the rod (3) has already reached its highest point, the deformable element (6) is already expanded both by the action of the actuator (7) and by the action of the fixed actuator (13). The end-of-stroke piece (8) has hit the stop (9). At this time, the rod can no longer ascend, so the pulling force causes the plate (2) and the main conduit (4) to exert a vertical downward force, pressing on the bolt (11), to break it.
FIGURE 4 shows a moment wherein the bolt (11) has already been broken in such a way that the main conduit (4) and the plate (2) descend, which allows the plate to tighten on the ground (not shown) on which it sits. Once seated, its position can be fixed through a fixing screw (12).

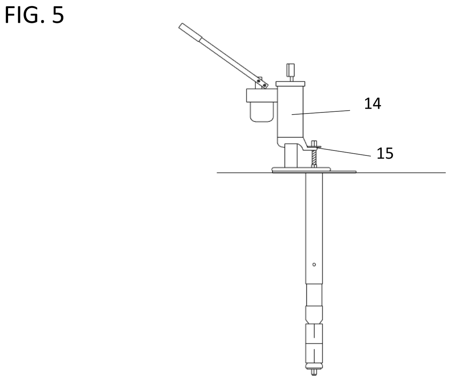

FIGURE 5 shows the device with the tractive element (14) mounted and the traction point (15).

### DESCRIPTION OF AN EMBODIMENT

The following is an embodiment of the invention that is not limiting but merely explanatory.

The invention relates to a method and device for anchoring an element to the ground.

In the device (1) there is a rigid threaded rod (3) attached by a tractive point (15) to a tractive element (14), in this case an hydraulic jack that pulls it in an upward direction in such a way that the rod (3) in its upward movement displaces an actuator (7) that, together with the actuation of a fixed actuator (13) deforms a deformable element (6). This deformable element, when passing from an initial state to an expanded state, is anchored to the hollow of the ground into which it has previously been introduced.

The stroke of the rod (3), once the deformable element (6) is deformed, is interrupted by a stop (9) which, when reached by the end of the stroke (8), prevents the rod (3) from continuing its ascent which causes, once the bolt is broken, the descent of an upper structure comprising a plate (2) and a main conduit (4).

The device comprises:
- a plate (2) with a through hole suitable for sitting on the ground to anchor the device.
- A rod (3) that crosses the plate through the hole which in its lower part is attached to an actuator (7). This rod (3), during the anchoring operations, is attached to a tractive element (14) by the traction point (15). The tractive element is an hydraulic jack that pulls the rod in an upward vertical direction.
- A tubular main conduit (4) facing the bottom of the through-hole of the plate (2). Said conduit is traversed by the rod (3) and comprises facing holes as a support for a bolt element (11).
- A secondary conduit (5) arranged at the bottom of the main conduit (4), aligned and coaxial with it with at least one opening to house the stop part (9) and facing holes as a support for a bolt element (11).
- A deformable element (6) arranged at the lower end of a secondary conduit (5). Said deformable element (6) interacts with the rod (3) being crossed by it. The deformable element has two states, an initial state wherein it is suitable to be introduced into the cavity and slide inside it and, an expanded state wherein its geometry prevents it from sliding through the cavity. The passage from one state to the other occurs by action of the actuator (7) associated with the upward movement of the rod (3) and the fixed actuator (13) arranged between the end of the secondary conduit and the deformable element.
- A series of elements arranged along the body of the rod (3) that constrain the upward and downward movement of the rod (3). These elements are:
   ∘ a brake (10) that fixes the position of the rod (3) at its highest point preventing its retraction.
   ∘ A stop part (9) that stops the upstroke of the rod (3)
   ∘ An end-of-stroke piece (8) that, when it meets the stop (9), stops the ascent of the rod (3) and prevents it from continuing to expand once the desired expansion of the deformable element (6) has been reached.

At the beginning of the use of the device (1) the bolt support (11) present in both the main conduit (4) and the secondary conduit (5) interact, all of them being holes, being aligned and the bolt (11) housed therein.

The brake (10), the stop (9) and the end-of-stroke element (8) are all arranged in the body of the rod (3) where the brake is arranged on the stop (9) and below the bolt (11). The end-of-stroke element (8) is arranged below the stop (9).

The secondary conduit (5) is smaller in diameter than the main conduit and overlaps this main conduit (4). The rod (3) and its elements run through the inside of both conduits.

When the end-of-stroke element (8) abuts the stop (9) and the upward movement of the rod (3) is braked, the tractive element continues to pull the rod (3) generating a downward vertical force on the plate (2) which, at first, does not descend due to the action of the bolt (11) that maintains the relative position between the main conduit (4) with the secondary conduit (5).

When the downward vertical force is greater than the resistance of the bolt (11), it breaks, allowing the plate (2) and the main conduit (4) to descend, thus tightening the plate (2) against the surface on which the assembly rests.

The method of anchoring the device (1) comprises the following steps:
- A first step of location where the assembly of the device (1) is housed in a cavity of the pre-existing ground with a sufficient diameter that allows the main conduit (4) to slide inside. The rod (3) is arranged inside the main conduit (4) and crosses both the secondary conduit (5) and the deformable element (6) at its lower end. The plate (2) is placed on the surface of the ground with its through hole facing the upper end of the main conduit (4) and where the excess rod (3) protrudes through that hole. The tractive element that is associated with the rod (3), is arranged on the plate (2) by means of a screw. The position of the rod (3) can be fixed, preventing its retraction, by means of a fixing screw (12) that abuts the plate (2).
- A second step of expansion of the deformable element (6) wherein the tractive element (14) pulls the rod (3) moving it upwards causing the actuator (7) and the fixed actuator (13) to act on the deformable element causing it to expand and be anchored to the internal walls of the cavity. The actuator (7) comprises a widening with a conical upper base that penetrates inside the deformable element (6), expands it and in turn this deformable element moves and collides with a fixed actuator (13) that has a conical lower base that causes the widening of the deformable element.
- A third step of end of ascent of the rod (3) wherein the upward movement is stopped by the action of the stop (9) arranged in the body of the rod (3).
- A fourth step of tensioning the rod wherein, once the upward movement has stopped, the brake (10), by geometry, traps the rod (3) to prevent its descent and when the traction element continues pulling the rod (3) and it cannot continue its ascent, the rod is tensioned while a downward vertical force is generated on the plate and this force is transferred to the main conduit and the bolt.
- A fifth step of breakage and displacement wherein the bolt (11), which connects the main conduit (4) with the secondary conduit (5), is broken by the force generated vertically downwards on the plate and the main conduit (4), which allows the descent of the main conduit (4) and the plate (2), this fitting snugly to the surface on which it rests.
- A sixth securing step wherein the part of the rod (3) that protrudes through the plate (2) is fixed to prevent its retraction.

## Claims

1. DEVICE FOR ANCHORING AN ELEMENT TO THE GROUND, comprising a rod (3) attached to an actuator (7) and, during the installation of the anchor, also to a tractive element (14), a deformable element (6) suitable for moving from an initial state in which said deformable element can slide and be housed inside a hole in the ground, to an expanded state in which the geometry adopted by the deformable element (6) prevents it from sliding through the hole, **characterized in that** it comprises:
- a plate (2) with a through hole resting on the surface of the ground, wherein the rod (3) crosses the plate (2) through said hole.
- A main conduit (4) facing the bottom of the through-hole of the plate (2). This main conduit (4) comprises a support for a bolt element (11).
- A secondary conduit (5) at the bottom of the main conduit (4) both conduits being aligned. The secondary conduit comprises a support for the bolt element (11)
- A stop (9).
- The deformable element (6) arranged at the lower end of the secondary conduit.
- A series of elements arranged along the rod (3) suitable to constrain the upward or downward stroke thereof and comprising a brake (10) suitable to prevent the retraction of the rod (3) and an end-of-stroke element (8) suitable to, when tripping over the stop (9), limit the ascent of the rod (3).
- A bolt element (11) that connects the main conduit (4) and the secondary conduit (5) maintaining, until the moment that bolt element breaks, the relative position between both conduits. The bolt element (11) is housed in the supports of the bolt element existing in the main conduit (4) and in the secondary conduit (5).
Wherein the rod (3) runs through the main conduit (4), the secondary conduit (5) and deformable element (6) and where, in its upward stroke by action of the tractive element, the actuator (7) causes the deformable element (6) to pass from an initial state to an expanded state.

2. DEVICE FOR ANCHORING AN ELEMENT TO THE GROUND according to claim 1 **characterised in that** the rod (3) is threaded.

3. DEVICE FOR ANCHORING AN ELEMENT TO THE GROUND according to claim 1 **characterised in that** the main conduit (4) and the secondary conduit (5) are coaxial and overlap.

4. DEVICE FOR ANCHORING AN ELEMENT TO THE GROUND according to claim 1 **characterised in that** the brake (10) is arranged below the bolt element (11).

5. DEVICE FOR ANCHORING AN ELEMENT TO THE GROUND according to claim 1 **characterised in that** the stop (9) is arranged below the brake (10)

6. DEVICE FOR ANCHORING AN ELEMENT TO THE GROUND according to claim 1 **characterised in that** the end-of-stroke element (8) is arranged below the stop (9).

7. DEVICE FOR ANCHORING AN ELEMENT TO THE GROUND according to claim 1, **characterised in that** it further comprises a fixed actuator (13) arranged between the deformable element and the lower end of the secondary conduit.

8. METHOD OF ANCHORING AN ELEMENT TO THE GROUND using a device according to claims 1-7 **characterized in that** it comprises the following steps:
- A first step of locating where the main conduit, the secondary conduit, the deformable element and the actuator or actuators and the rod are housed in a hole in the ground while the plate is located on the surface of the ground with its through hole facing the upper end of the main conduit, the rod protruding through the hole, the rod being attached to the tractive element (14) suitable for pulling it.
- A second step of actuation of the tractive element, ascent of the rod and of the actuating element and expansion of the deformable element.
- A third step of end of ascent of the rod (3) by actuation of the stop.
- A fourth step of brake actuation, tensioning of the rod and application of vertical downward force on the plate.
- A fifth step of breakage and downward movement of the plate. A sixth securing step wherein the rod that protrudes through the plate is fixed to prevent its retraction.

9. METHOD OF ANCHORING AN ELEMENT TO THE GROUND according to claim 8, **characterised in that** in the second step the tractive element pulls the rod, causing its ascent and that of the actuator (7), causing the deformable element to pass from an initial state to an expanded state and be anchored to the internal walls of the cavity.

10. METHOD OF ANCHORING AN ELEMENT TO THE GROUND according to claim 8, **characterised in that** in the third step the end-of-stroke element (8) reaches the stop (9) and the ascent of the rod is stopped.

11. METHOD OF ANCHORING AN ELEMENT TO THE GROUND according to claim 8 **characterized in that** in the fourth step the brake (10) traps the rod preventing its descent and the tractive element continues to pull the rod in such a way that when it cannot continue its ascent, a vertical downward force is generated on the plate (2) and the main conduit (4) that does not alter its position by the action of the bolt (11) that prevents its descent.

12. METHOD OF ANCHORING AN ELEMENT TO THE GROUND according to claim 8, **characterised in that** in the fifth step the vertical downward force transferred by the main conduit (4) from the plate (2) to the bolt (11), breaks the bolt, freeing the descent of the main conduit and the plate that adheres to the surface on which it rests.
